# EUROPÄISCHE PATENTSCHRIFT

(11) **EP 4 072 874 B1**
(45) Veröffentlichungstag und Bekanntmachung des Hinweises auf die Patenterteilung: **18.09.2024**
(21) Anmeldenummer: 20781487.2
(22) Anmeldetag: 28.09.2020
(51) Int. Cl.: B60H 1/00, B60H 1/32, F25B 30/00, F25B 5/02, F25B 5/00, F25B 13/00, F25B 40/00, F25B 49/02, F25B 25/00, F25B 41/40, F25B 41/20

(54) **NACHHEIZVERFAHREN ZUM BETREIBEN EINER KÄLTEANLAGE FÜR EIN KRAFTFAHRZEUG, KÄLTEANLAGE UND KRAFTFAHRZEUG MIT EINER SOLCHEN KÄLTEANLAGE**
REHEATING METHOD FOR OPERATING A REFRIGERATION SYSTEM FOR A MOTOR VEHICLE, REFRIGERATION SYSTEM, AND MOTOR VEHICLE HAVING A REFRIGERATION SYSTEM OF THIS TYPE
PROCÉDÉ DE RÉCHAUFFAGE POUR FAIRE FONCTIONNER UN SYSTÈME DE RÉFRIGÉRATION POUR UN VÉHICULE À MOTEUR, SYSTÈME DE RÉFRIGÉRATION, ET VÉHICULE À MOTEUR ÉQUIPÉ D'UN SYSTÈME DE RÉFRIGÉRATION DE CE TYPE

(30) Priorität: 09.12.2019 DE 102019133489
(43) Veröffentlichungstag der Anmeldung: 19.10.2022
(73) Patentinhaber: Audi AG, 85045 Ingolstadt (DE)
(72) Erfinder: SCHROEDER, Dirk, 85077 Manching (DE); REBINGER, Christian, 80807 München (DE); ROTTENKOLBER, Helmut, 93349 Mindelstetten (DE)
(86) Internationale Anmeldenummer: PCT/EP2020/077049
(87) Internationale Veröffentlichungsnummer: WO 2021/115654

(56) Entgegenhaltungen:
- EP-A1- 1 456 046
- EP-A1- 2 743 107
- WO-A1-2019/076615
- WO-A1-2019/155905
- WO-A1-2020/030556
- DE-A1- 102014 017 446
- JP-A- S6 012 327
- US-A- 5 299 431

## Beschreibung

Die Erfindung betrifft ein Nachheizverfahren (RH I) gemäß dem Oberbegriff von Anspruch 1 zum Betreiben einer Kälteanlage mit Wärmepumpenfunktion für ein Kraftfahrzeug, eine Kälteanlage und ein Kraftfahrzeug mit einer solchen Kälteanlage.

Eine Kälteanlage mit Wärmepumpenfunktion umfasst üblicherweise einen Kältemittelverdichter, der mit einem Primärstrang und einem Sekundärstrang verbindbar oder verbunden ist; einen äußeren Wärmeübertrager, der im Primärstrang angeordnet ist; einen Verdampfer, der im Primärstrang angeordnet ist; ein Heizregister, das im Sekundärstrang angeordnet ist; wenigstens eine bewegliche Temperaturklappe, die bezogen auf eine Zuluftströmungsrichtung vor oder nach dem Heizregister angeordnet ist; und wenigstens ein Absperrorgan, das stromabwärts des Heizregisters im Sekundärstrang angeordnet ist.

Eine derartige Kälteanlage mit Wärmepumpenfunktion ist beispielsweise in der DE 10 2018 213 232.1 beschrieben, die zum Zeitpunkt der Einreichung der vorliegenden Anmeldung noch nicht veröffentlicht war.

Ein derartiges Nachheizverfahren mit einer entsprechenden Kälteanlage ist auch aus der EP 2 743 107 A1 bekannt

Weitere Hintergrundinformationen zu Kälteanlagen bzw. Wärmepumpen finden sich beispielsweise in den Druckschriften DE 10 2014 017 446 A1, WO 2019/076615 A1, EP 1 456 046 A1, WO 2019/155905 A1, US 5 299 431 A, JP S60 12327 A, WO 2020/030556 A1, EP 0 989 003 A2, DE 10 2006 002 233 A1 und DE 10 2016 008 743 B3.

Bei einem Nachheizverfahren, das im Fachjargon auch als Reheat, Reheat-Betrieb, Reheat-Verfahren bezeichnet wird, wird bei der Klimatisierung eines Fahrzeuginnenraums die durch den Verdampfer gekühlte und entfeuchtete Luft durch wenigstens teilweise Erwärmung mittels des Heizregisters auf eine gewünschte Ausblastemperatur gebracht.

Das Heizregister ist dabei eine Wärmequelle, bei der im Kältemittel gespeicherte Wärme an ein anderes Medium, wie Luft, Wasser, Wasser-Glykol-Gemisch und dergleichen abgegeben wird. Das Heizregister kann als Heizkondensator bzw. Heizgaskühler ausgeführt sein, wenn es direkt von (Umgebungs-)Luft als Kabinenzuluft umströmt wird, welche die abgegebene Wärme aufnimmt. Das Heizregister kann als Fluid-Wärmeübertrager ausgeführt sein, wenn es von einem anderen Fluid als (Umgebungs-)Luft, wie beispielsweise Wasser, Wasser-Glykol-Gemisch oder dergleichen durch- bzw. umströmt wird, wobei die im Kältemittel gespeicherte Wärme an das Fluid abgegeben wird. Bei der Ausgestaltung als Fluid-Wärmeübertrager erfolgt dann ein weiterer Wärmeübergang vom erwärmten Fluid auf die (Umgebungs-)Luft. Insoweit erfolgt durch einen Fluid-Wärmeübertrager eine indirekte Erwärmung von (Umgebungs-)Luft als Kabinenzuluftstrom.

Dabei kann im Luftströmungsweg zwischen dem Verdampfer und dem Heizregister (also stromaufwärts des Heizregisters) wenigstens eine Temperaturklappe zum Einsatz kommen, die ganz geschlossen (0% Öffnungsstellung bzw. Schließstellung) ist, wenn die Luft gekühlt und nicht erwärmt in den Fahrzeuginnenraum geleitet werden soll. Wenn die Temperaturklappe vollständig geöffnet ist (100% Öffnungsstellung) wird im Wesentlichen der gesamte vom Verdampfer kommende Luftstrom über das Heizregister geleitet und erwärmt. Bei einer teilweisen Öffnung der Temperaturklappe wird ein Teil der Luft über das Heizregister geleitet und der andere Teil der Luft wird um das Heizregister herum geleitet und nicht erwärmt, so dass sich stromabwärts des Heizregisters eine Mischung aus erwärmter und gekühlter Luft bildet, die dann dem Fahrzeuginnenraum zugeleitet wird. Die verstellbare Temperaturklappe kann alternativ auch stromabwärts des Heizregisters angeordnet sein.

Die der Erfindung zu Grunde liegende Aufgabe wird darin gesehen, ein Nachheizverfahren anzugeben, das einen optimierten Betrieb der Kälteanlage ermöglicht.

Diese Aufgabe wird gelöst durch eine Nachheizverfahren mit den Merkmalen des Patentanspruchs 1, durch eine Kälteanlage mit den Merkmalen des Patentanspruchs 7 und durch ein Kraftfahrzeug mit den Merkmalen des Patentanspruchs 10. Vorteilhafte Ausgestaltungen mit zweckmäßigen Weiterbildungen sind in den abhängigen Patentansprüchen angegeben.

Vorgeschlagen wird also ein Nachheizverfahren zum Betreiben einer Kälteanlage für ein Kraftfahrzeug, wobei die Kälteanlage umfasst:
einen Kältemittelverdichter, der mit einem Primärstrang und einem Sekundärstrang verbindbar oder verbunden ist;
einen äußeren Wärmeübertrager, der im Primärstrang angeordnet ist;
einen Verdampfer, der im Primärstrang angeordnet ist;
ein Heizregister, das im Sekundärstrang angeordnet ist;
wenigstens eine bewegliche Temperaturklappe, die bezogen auf eine Zuluftströmungsrichtung vor oder nach (stromaufwärts oder stromabwärts) dem Heizregister angeordnet ist;
wenigstens ein Absperrorgan, das stromabwärts des Heizregisters im Sekundärstrang angeordnet ist.

Dabei umfasst das Nachheizverfahren folgende Schritte:
Einstellen des wenigstens einen Absperrorgans in eine Position, in der Kältemittel stromabwärts des Heizregisters in den Verdampfer strömt unter Umgehung des äußeren Wärmeübertragers.

Durch ein derartiges Verfahren wird der Nachheizbetrieb bzw. Reheatmodus durch eine sehr kompakte Verschaltung der Kälteanlage mit einem Minimum an aktiven Komponenten erreicht.

Bei dem Nachheizverfahren kann die Umgebungstemperatur erfasst werden und das Verfahren durchgeführt werden, wenn die Umgebungstemperatur bis zu 15°C beträgt, insbesondere in einem Bereich von etwa 5° bis 15° liegt. Hierdurch kann sichergestellt werden, dass die kompakte Verschaltung der Kälteanlage dann vorgenommen wird, wenn die Betriebs- und Umgebungsbedingungen günstig für einen solchen Nachheizbetrieb sind.

Die Temperatur der Zuluft wird nach dem Durchströmen des Verdampfers gemessen, wobei eine Solltemperatur für die Temperatur der Zuluft nach dem Durchströmen des Verdampfers in Abhängigkeit von einem Entfeuchtungsbedarf oder/und von der Heizleistung oder/und dem Heizbedarf eingestellt werden kann. Dabei können entsprechende Steuergrößen bzw. -parameter von einem Klimasteuergerät vorgegeben werden, durch das eine Temperierung des Fahrzeuginnenraums gesteuert bzw. geregelt wird. Der Entfeuchtungsbedarf kann beispielsweise über Umgebungsbedingungen in Innenraumkonditionen ermittelt werden.

Das Nachheizverfahren umfasst die weiteren Schritte:
Einstellen der Temperaturklappe in einer Soll-Öffnungsstellung;
Beibehalten der Soll-Öffnungsstellung der Temperaturklappe;
Schrittweises Reduzieren oder schrittweises Anheben der Solltemperatur in Abhängigkeit von dem Entfeuchtungsbedarf oder/und von dem Heizbedarf, der anhand eines Kälteanlagenparameters ermittelt wird, bis sich hochdruckseitig an dem Heizkondensator ein vorbestimmtes Druckniveau einstellt oder/ und bis eine maximale oder minimale Solltemperatur eingestellt ist. Wird die Solltemperatur angehoben, sind bzw. können ergänzend die entsprechenden Steuerparameter für den Entfeuchtungsbedarf (Entfeuchtungsvoraussetzungen) überprüft werden.

Das Einstellen der Solltemperatur der Luft nach dem Verdampfer wird auch als Variation des Setpoints der Lufttemperatur nach dem Verdampfer bezeichnet. Dabei kann die Solltemperatur beispielsweise auf minimal 2 bis 4°C eingestellt werden, um eine Vereisung des Verdampfers durch auskondensierendes Wasser aus dem Verdampferzuluftstrom zu verhindern.

Wird die zu erreichende Solltemperatur der Luft nach dem Verdampfer reduziert, wird stärker gekühlte Luft bereitgestellt, entsprechend kann an dem Heizregister mehr oder weniger gekühlte Luft bereitgestellt werden, so dass eine gewünschte Ausblastemperatur von konditionierter Innenraumzuluft, insbesondere durch entsprechendes Öffnen bzw. Schließen der mindestens einen Temperaturklappe, erreicht werden kann.

Nach dem Erreichen des vorbestimmten Druckniveaus kann das wenigstens eine Absperrorgan umgestellt werden, so dass das Kältemittel stromabwärts des Heizregisters durch den äußeren Wärmeübertrager strömt, bevor es durch den Verdampfer strömt. Hierdurch wird insbesondere ein Übergang bzw. Umschalten von dem hier beschriebenen Nachheizverfahren in ein anderes Nachheizverfahren eingeleitet.

Die Soll-Öffnungsposition der Temperaturklappe kann auf einen Wert zwischen 60% bis 90% eingestellt werden, insbesondere auf einen Wert zwischen 70% und 85%, bezogen auf eine maximale Öffnungsstellung von 100%.

Bei dem Nachheizverfahren kann die Menge der zum Verdampfer zugeführten Zuluft eingestellt werden, um die Heizleistung zu beeinflussen. Dabei kann die Kondition oder Güte der Zuluft eingestellt werden, insbesondere kann als Zuluft Frischluft oder Umluft oder eine Mischung aus Frischluft und Umluft zugeführt werden. Dabei kann Umluft dem Innenraum des Fahrzeugs entnommen werden und Frischluft wird der Fahrzeugumgebung entnommen.

Vorgeschlagen wird auch eine Kälteanlage für ein Kraftfahrzeug, mit
einem Kältemittelverdichter, der mit einem Primärstrang und einem Sekundärstrang verbindbar oder verbunden ist;
einem äußeren Wärmeübertrager, der im Primärstrang angeordnet ist;
einem Verdampfer, der im Primärstrang angeordnet ist;
einem Heizregister, das im Sekundärstrang angeordnet ist;
wenigstens einer beweglichen Temperaturklappe, die bezogen auf eine Zuluftströmungsrichtung vor oder nach (stromaufwärts oder stromabwärts) dem Heizregister angeordnet ist;
wenigstens einem Absperrorgan, das stromabwärts des Heizregisters im Sekundärstrang angeordnet ist;
wobei die Kälteanlage ein Steuergerät aufweist, das dazu eingerichtet ist, die Kälteanlage gemäß dem oben beschriebenen Nachheizverfahren zu betreiben, und
wobei in einem solchen Nachheizbetrieb das Kältemittel ausgehend vom Kältemittelverdichter nacheinander die folgenden Komponenten der Kälteanlage unter Umgehung des äußeren Wärmeübertragers durchströmt: Heizregister im Sekundärstrang und Verdampfer im Primärstrang.

Je nach Systemtopologie kann der äußere Wärmeübertrager mono- bzw. bidirektional durchströmbar sein. Hierdurch kann mittels der Kälteanlage ein Luftwärmepumpenbetrieb ermöglicht werden.

Zwischen dem Heizregister und dem Verdampfer kann ein Absperrventil angeordnet sein und zwischen dem Heizregister und dem äußeren Wärmeübertrager kann ein Expansionsventil angeordnet sein. Sowohl das Absperrventil, als auch das Expansionsventil stellen ein jeweiliges Absperrorgan dar, das für das Durchführen des Nachheizverfahrens eingesetzt wird. Bei einer solchen Konfiguration kann das Nachheizverfahren mit geöffnetem Absperrventil und geschlossenem Expansionsventil durchgeführt werden, so dass Kältemittel vom Heizregister direkt zum Verdampfer strömen kann.

Alternativ kann zwischen dem Heizregister und dem Verdampfer ein Rückschlagventil angeordnet sein. Auch das Rückschlagventil stellt ein Absperrorgan dar, das für das Durchführen des Nachheizverfahrens eingesetzt wird. Ein solches Rückschlagventil ermöglicht das Durchströmen von Kältemittel vom Heizregister in Richtung des Verdampfers, wobei ein Durchströmen oder auch Rückströmen in der Gegenrichtung verhindert ist. Weiter kann der äußere Wärmeübertrager monodirektional durchströmbar sein. Bei einer derartigen Konfiguration der Kälteanlage ist ein Luftwärmepumpenbetrieb weiterhin darstellbar, jedoch ist ein Nachheizbetrieb über eine Reihenschaltung von Heizregister und dem äußeren Wärmeübertrager nicht möglich, weil auf eine strömungstechnische Verbindung bzw. Leitung zwischen dem Heizregister und dem äußeren Wärmeübertrager verzichtet wird. Insofern stellt eine derartige Konfiguration eine Vereinfachung einer Kälteanlage dar, die aber weiterhin mit dem Nachheizverfahren betrieben werden kann.

Wie oben ausgeführt kann der äußere Wärmeübertrager monodirektional oder bidirektional durchströmbar sein, je nach Ausführungsform der Kälteanlage. Bei einer monodirektionalen Variante wird im Kälteanlagenbetrieb und im Luftwärmepumpenmodus der äußere Wärmeübertrager vom Kältemittel stets in derselben Richtung bzw. in derselben Weise durchströmt. Bei einer bidirektionalen Variante wird der äußere Wärmeübertrager im Kälteanlagenbetrieb vom Kältemittel in anderer bzw. unterschiedlicher Richtung (entgegengesetzt) durchströmt als im Luftwärmepumpenmodus. Bezüglich des äußeren Wärmeübertragers ist noch anzumerken, dass er - ähnlich zum Heizregister - sowohl direkt (als Gaskondensator bzw. Gaskühler) als auch indirekt (als Fluid-Wärmeübertrager) Wärme an die (Umgebungs-)Luft abgeben oder aus dieser aufnehmen kann.

Ein Kraftfahrzeug kann mit einer oben beschriebenen Kälteanlage ausgestattet sein. Dabei kann es sich bei dem Kraftfahrzeug insbesondere um ein Elektrofahrzeug handeln. Bei einem Elektrofahrzeug kann der effiziente Betrieb der Kälteanlage zu Stromeinsparungen führen, so dass hierdurch eine größere Reichweite des Elektrofahrzeugs erzielt werden kann.

Weitere Vorteile und Einzelheiten der Erfindung ergeben sich aus der nachfolgenden Beschreibung von Ausführungsformen unter Bezugnahme auf die Figuren. Dabei zeigt:
- Fig. 1: ein schematisches und vereinfachtes Schaltbild einer Kälteanlage für ein Kraftfahrzeug;
- Fig. 2: ein Flussdiagram einer beispielhaften Umsetzung des Nachheizverfahrens, insbesondere mittels der in Fig. 1 beschriebenen Kälteanlage;
- Fig. 3: ein schematisches und vereinfachtes Schaltbild einer Ausführungsform einer Kälteanlage für ein Kraftfahrzeug zur Durchführung des Nachheizverfahrens;
- Fig. 4: ein schematisches und vereinfachtes Schaltbild einer Ausführungsform einer Kälteanlage für ein Kraftfahrzeug zur Durchführung des Nachheizverfahrens.

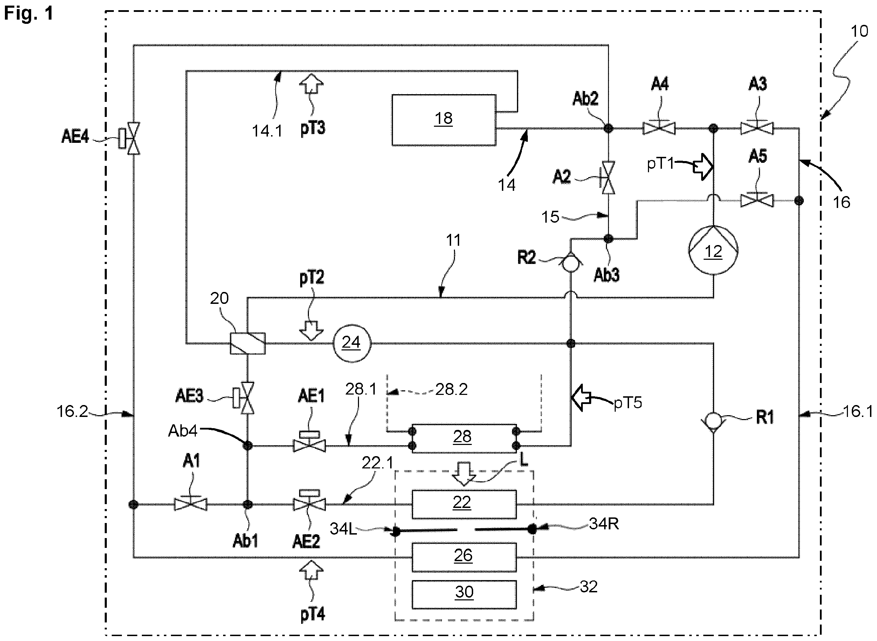

In Fig. 1 ist eine Ausführungsform einer Kälteanlage 10 für ein Kraftfahrzeug schematisch und vereinfacht dargestellt. Die Kälteanlage 10 umfasst einen Kältemittelkreislauf 11, der sowohl in einem Kälteanlagenbetrieb (kurz auch AC-Betrieb genannt), als auch in einem Wärmepumpenmodus betrieben werden kann. Die Kälteanlage 10 umfasst in der gezeigten Ausführungsform einen Kältemittelverdichter 12, einen äußeren Wärmeübertrager 18, einen inneren Wärmeübertrager 20, einen Verdampfer 22 und einen Akkumulator bzw. Kältemittelsammler 24. Der äußere Wärmeübertrager 18 kann als Kondensator oder Gaskühler ausgebildet sein. Insbesondere ist der äußere Wärmeübertrager 18 in der dargestellten Ausführungsform bidirektional durchströmbar.

Der Verdampfer 22 ist hier beispielhaft als Frontverdampfer für ein Fahrzeug gezeigt. Der Verdampfer 22 steht stellvertretend auch für weitere in einem Fahrzeug mögliche Verdampfer, wie beispielsweise Fondverdampfer, die strömungstechnisch parallel zueinander angeordnet sein können. Mit anderen Worten umfasst die Kälteanlage 10 also wenigstens einen Verdampfer 22.

Stromabwärts des Verdichters 12 ist ein Absperrventil A4 angeordnet. Stromaufwärts des Verdampfers 22 ist ein Expansionsventil AE2 vorgesehen.

Im Rahmen dieser Beschreibung wird in dem gesamten Kältemittelkreislauf 11 der Kälteanlage 10 der Abschnitt vom Verdichter 12 zum äußeren Wärmeübertrager 18, zum inneren Wärmeübertrager 20 und zum Verdampfer 22 als Primärstrang 14 bezeichnet.

Die Kälteanlage 10 umfasst weiter ein Heizregister 26 (auch als Heizkondensator oder Heizgaskühler bezeichnet). Stromaufwärts des Heizregisters 26 ist ein Absperrventil A3 angeordnet. Stromabwärts des Heizregisters 26 ist ein Absperrventil A1 angeordnet. Ferner ist stromabwärts des Heizregisters 26 ein Expansionsventil AE4 angeordnet.

Im Rahmen dieser Beschreibung wird in dem gesamten Kältemittelkreislauf der Kälteanlage 10 der Abschnitt vom Verdichter 12 zum Heizregister 26, zum Expansionsventil AE4 und zu einem Abzweig Ab2 als Sekundärstrang 16 bezeichnet. Der Sekundärstrang 16 umfasst einen Heizzweig 16.1, der sich von dem Absperrventil A3 über das Heizregister 26 zum Absperrventil A1 erstreckt. Weiter umfasst der Sekundärstrang 16 einen Nachheizzweig bzw. Reheat-Zweig 16.2, der stromaufwärts mit dem Heizregister 26 und stromabwärts mit dem äußeren Wärmeübertrager 5 fluidverbindbar ist. Dabei mündet der Sekundärstrang 16 bzw. der Reheat-Zweig 16.2 bei einem Abzweigpunkt Ab2 in den Primärstrang 14.

Die Kälteanlage 10 umfasst einen weiteren Verdampfer bzw. Chiller 28. Der Chiller 28 ist strömungstechnisch parallel zum Verdampfer 22 vorgesehen. Der Chiller 28 kann beispielsweise zur Kühlung einer elektrischen Komponente des Fahrzeugs dienen, aber auch zur Realisierung einer Wasser-Wärmepumpenfunktion unter Nutzung der Abwärme von wenigstens einer elektrischen Komponente. Dem Chiller 28 ist stromaufwärts ein Expansionsventil AE1 vorgeschaltet.

Die Kälteanlage 10 kann auch ein elektrisches Heizelement 30 aufweisen, das beispielsweise als Hochvolt-PTC-Heizelement ausgeführt ist. Das elektrische Heizelement 30 dient als Zusatzheizer für einen in den Fahrzeuginnenraum geführten Zuluftstrom L. Dabei kann das elektrische Heizelement 30 zusammen mit dem Heizregister 26 und dem Verdampfer 22 in einem Klimagerät 32 untergebracht sein. Dabei kann das elektrische Heizelement 30 dem Heizregister 26 nachgeschaltet angeordnet sein.

In der Fig. 1 sind ferner noch Rückschlagventile R1 und R2 ersichtlich. Ferner sind auch einige Sensoren pT1 bis pT5 zur Erfassung von Druck oder/ und Temperatur des Kältemittels dargestellt. Es wird darauf hingewiesen, dass die Anzahl der Sensoren bzw. deren Anordnung hier nur beispielhaft gezeigt ist. Eine Kälteanlage 10 kann auch weniger oder mehr Sensoren aufweisen. Im gezeigten Beispiel sind als Sensoren kombinierte Druck-/Temperatursensoren pT1 bis pT5 gezeigt. Es ist aber genauso denkbar, dass voneinander getrennte Sensoren für die Messung von Druck bzw. Temperatur eingesetzt werden und ggf. auch räumlich voneinander getrennt entlang den Kältemittelleitungen angeordnet sind.

Die Kälteanlage 10 kann in unterschiedlichen Modi betrieben werden, die nachfolgend kurz beschrieben werden.

Im AC-Betrieb des Kältemittelkreislaufs 11 strömt das auf Hochdruck verdichtete Kältemittel ausgehend von dem Kältemittelverdichter 12 bei offenem Absperrventil A4 in den äußeren Wärmeübertrager 18. Von dort strömt es zu dem Hochdruckabschnitt des inneren Wärmeübertragers 20 und dem vollständig geöffneten Expansionsventil AE3. Über einen Abzweigpunkt Ab1 kann das Kältemittel zum Expansionsventil AE2 und in den Innenraum-Verdampfer 22 strömen (Verdampferabschnitt 22.1). Parallel oder alternativ kann das Kältemittel über einen Abzweigpunkt Ab4 und das Expansionsventil AE1 in den Chiller 28 strömen (Chillerabschnitt 28.1). Aus dem Verdampfer 22 oder/und dem Chiller 28 strömt das Kältemittel niederdruckseitig in den Sammler 24 und durch den Niederdruckabschnitt des inneren Wärmeübertragers 20 zurück zum Verdichter 12.

In dem AC-Betrieb ist der Heizzweig 16.1 bzw. der Sekundärstrang 16 mittels des Absperrventils A3 abgesperrt, so dass heißes Kältemittel nicht durch das Heizregister 26 strömen kann. Zur Rückholung von Kältemittel aus dem inaktiven Heizzweig 16.1 kann das als Absperrventil ausgebildete Absperrorgan A5 geöffnet werden, so dass das Kältemittel über das Absperrorgan A5 und das Rückschlagventil R2, bei gleichzeitig geschlossenem Absperrorgan A2, in Richtung des Sammlers 24 strömen kann.

Im Heizbetrieb des Kältemittelkreislaufs 11 wird das Absperrventil A4 geschlossen und das Absperrventil A3 geöffnet, so dass heißes Kältemittel in den Heizzweig 16.1 strömen kann.

Zur Durchführung der Heizfunktion mittels des Chillers 28 zur Realisierung eines Wasser-Wärmepumpenbetriebs strömt das mittels des Kältemittelverdichters 12 verdichtete Kältemittel über das geöffnete Absperrventil A3 in das Heizregister 26. Am Heizregister 26 wird Wärme an einen in den Fahrzeuginnenraum geführten Zuluftstrom L abgegeben. Das Kältemittel strömt anschließend über das geöffnete Absperrventil A1 und den Abzweigpunkt Ab1. Es wird mittels des Expansionsventils AE1 in den Chiller 28 zur Aufnahme von Abwärme der in einem Kühlmittelkreislauf 28.2 angeordneten elektrischen und/oder elektronischen Komponenten entspannt. Bei dieser Heizfunktion sind die Expansionsventile AE3 und AE4 geschlossen, das Absperrventil A5 geschlossen und das Absperrventil A2 geöffnet. Dabei kann über das Absperrventil A2 im Wasser-Wärmepumpenbetrieb ausgelagertes Kältemittel aus einem Bidirektionalzweig 14.1 bzw. dem Primärstrang 14 abgesaugt und über das Rückschlagventil R2 dem Sammler 24 zugeführt werden.

Zur Durchführung der Heizfunktion mittels des äußeren Wärmeübertragers 18 als Wärmepumpenverdampfer strömt das mittels des Kältemittelverdichters 12 verdichtete Kältemittel über das geöffnete Absperrventil A3 zur Abgabe von Wärme an einen Zuluftstrom L in das Heizregister. Anschließend wird es über das geöffnete Absperrventil A1 mittels des Expansionsventils AE3 in den äu-ßeren Wärmeübertrager 18 zur Aufnahme von Wärme aus der Umgebungsluft entspannt. Danach strömt das Kältemittel über einen Wärmepumpenrückführzweig 15 zum Sammler 24 und zurück zum Kältemittelverdichter 12. Die Expansionsventile AE1, AE2 und AE4 bleiben dabei, ebenso wie das Absperrventil A5, geschlossen.

Eine indirekte Dreiecksschaltung kann dadurch realisiert werden, dass bei geöffnetem Absperrventil A1 das von dem Kältemittelverdichter 12 verdichtete Kältemittel mittels des Expansionsventils AE1 in den Chiller 28 entspannt wird, wobei gleichzeitig kühlmittelseitig, also in dem Kühlmittelkreislauf 28.2 kein Massenstrom erzeugt wird, also bspw. das als Kühlmittel verwendete Fluid, wie etwa Wasser oder Wasser-Glykol-Gemisch, auf der Kühlmittelseite des Chillers 28 stehen bleibt bzw. der Chiller 28 nicht aktiv von Kühlmittel durchströmt wird. Die Expansionsventile AE2, AE3 und AE4 bleiben bei dieser Schaltvariante geschlossen.

Bei einem Nachheiz- bzw. Reheat-Betrieb wird der in den Fahrzeuginnenraum zugeführte Zuluftstrom L mittels des Verdampfers 22 zunächst gekühlt und damit entfeuchtet. Mit der auf das Kältemittel durch Verdampfung und Entfeuchtung übertragenen Wärme sowie der dem Kältemittel über den Verdichter 12 zugeführten Wärme kann der Zuluftstrom L mittels des Heizregisters 26 vollständig oder zumindest teilweise wieder erwärmt werden.

Hierzu weist die Kälteanlage 10, insbesondere das Klimagerät 32, zwischen dem Verdampfer 22 und dem Heizregister 26 einstellbare, insbesondere steuerbare und schwenkbare, Temperaturklappen 34 auf. Im dargestellten Beispiel sind eine linke und eine rechte Temperaturklappe 34L und 34R (in Figur 1 schematisch dargestellt) angeordnet. Die Temperaturklappen 34L, 34R können zwischen einer Offenposition, die als 100%-Position bezeichnet wird, und einer Schließposition, die als 0%-Position bezeichnet wird, eingestellt bzw. verschwenkt werden. Alternativ ist es auch möglich, die Temperaturklappen 34R, 34L dem Heizregister 26 nachzuschalten.

In der 100%-Position wird der gesamte den Verdampfer 22 durchströmende Zuluftstrom L über das Heizregister 26 geführt und erwärmt, bevor dieser in den Fahrgastraum des Fahrzeugs strömen kann. In der 0%-Position strömt der gesamte den Verdampfer 22 durchströmende Zuluftstrom L im Bypass um das Heizregister 26 ohne Erwärmung und damit ohne Wärmeaufnahme in den Fahrgastraum.

In einer x-Position der Temperaturklappen 34L und 34R mit 0 % < x < 100 % sind diese Temperaturklappen nur teilweise geöffnet, so dass jeweils nur ein Teilluftstrom des den Verdampfer 22 durchströmenden Zuluftstroms L über das Heizregister 26 geführt wird. Dieser erwärmte Teilluftstrom kann anschließend dem verbleibenden, gekühlten und entfeuchteten Teilluftstrom beigemischt werden. Der in dieser Weise erwärmte Zuluftstrom L wird dem Fahrgastraum des Fahrzeugs zugeführt. Beispielhaft zeigt eine 50 %-Position an, dass die Temperaturklappen 34R und 34L nur halb, also 50 % geöffnet sind.

Ein Nachheiz- bzw. Reheat-Betrieb des Kältemittelkreislaufs 11 bzw. der Kälteanlage 10 wird in Abhängigkeit der Wärmebilanz auf unterschiedliche Weise durchgeführt.

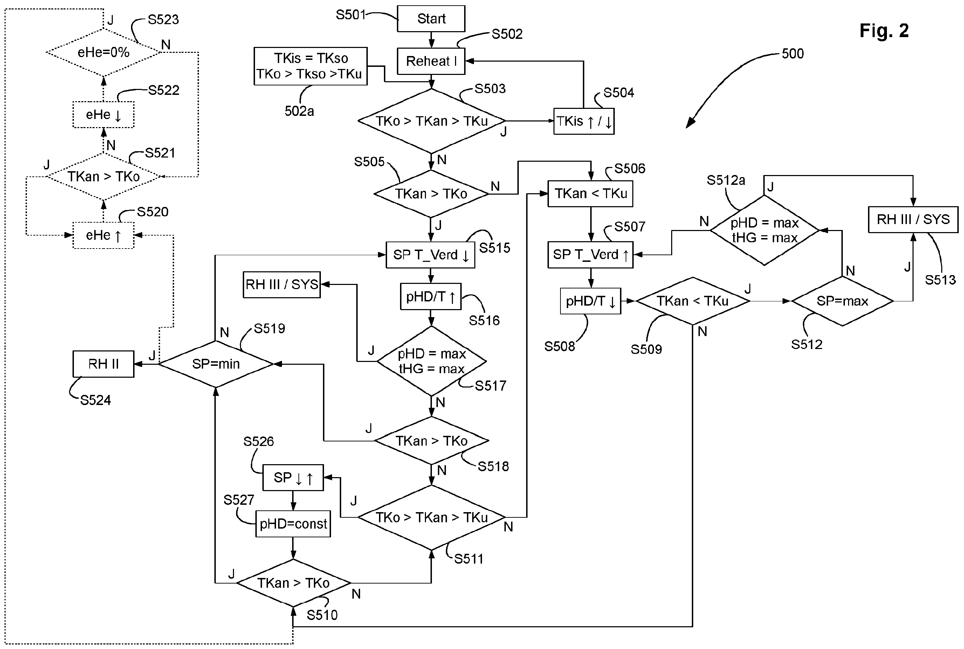

Nachfolgend wird ein für den Nachheiz- bzw. Reheatbetrieb mögliches Betriebsverfahren 500 anhand des Ablaufschemas der Fig. 2 und unter Bezugnahme auf die in Fig. 1 dargestellte Kälteanlage 10 und ihrer Komponenten beispielhaft erläutert. Ein solches Betriebsverfahren ist üblicherweise in einem Steuergerät für die Kälteanlage bzw. für die Klimatisierung in einem Fahrzeug als Steuerprogramm umgesetzt.

Betrachtet wird ein Nachheizbetrieb, bei dem das Kältemittel ausgehend von dem Verdichter 12 über das geöffnete Absperrventil A3 zum Heizregister 26 (Heizkondensator bzw. Heizgaskühler) strömt. Das Expansionsventil AE4 ist geschlossen und das Absperrventil A1 ist geöffnet, so dass das Kältemittel über das Expansionsventil AE2 in den Verdampfer 22 strömen kann. Die Expansionsventile AE3 und AE1 sind ebenfalls geschlossen. Der Nachheizbetrieb wird also mit einer Verschaltung der Kälteanlage 10 mit möglichst wenig aktiven Komponenten erreicht.

Gemäß dem in Fig. 2 gezeigten Nachheizverfahren 500 erfolgt im Betrieb nach dem Start (S501) der Kälteanlage 10 zu einem hier nicht näher bezeichneten Zeitpunkt ein Übergang in einen Nachheizbetrieb, der hier mit Reheat I (S502) bezeichnet ist. Eine mögliche Bedingung, die erfüllt sein muss, um den Nachheizbetrieb (S502) zu starten, kann beispielsweise die gemessene Umgebungstemperatur sein. Das Nachheizverfahren kann insbesondere aktiviert werden, wenn die Umgebungstemperatur bis zu 15°C. beträgt, insbesondere von etwa 5°C bis 15°C beträgt.

Bei dem Nachheizverfahren 500 werden die in diesem Anwendungsfall zwei Temperaturklappen 34L, 34R in eine Soll-Öffnungsstellung TKso eingestellt. TKso kann ein bestimmter Öffnungswert sein oder kann, wie dies in der Fig. 2 bei 502a gezeigt ist, ein Bereich sein von einem oberen Öffnungsgrenzwert TKo zu einem unteren Öffnungsgrenzwert TKu. Beim Betrieb der Kälteanlage 10 wird über wenigstens einen Kälteanlagenparameter bestimmt, ob der Heizbedarf gleichbleibend, steigend oder sinkend ist. Eine hier beispielhaft verwendete Größe bzw. Kälteanlagenparameter ist die seitens einer Steuereinheit angeforderte Temperaturklappenöffnung TKan. Wird eine größere Temperaturklappenöffnung TKan gefordert, ist der Heizbedarf steigend. Wird eine kleinere Temperaturklappenöffnung TKan gefordert, ist der Heizbedarf sinkend. Für die nachfolgende Beschreibung wird darauf hingewiesen, dass eine systemseitig angeforderte Temperaturklappenöffnung TKan in dem hier betrachteten Nachheizverfahren nicht zwingend zu einer entsprechenden Anpassung der tatsächlichen Öffnungsstellung bzw. Ist-Öffnungsstellung TKis der Temperaturklappen 34L, 34R führt.

Wie bereits erwähnt, wird davon ausgegangen, dass sich die Temperaturklappen in einer tatsächlichen Öffnungsstellung TKis befinden, die im Bereich von TKo bis TKu liegt. Gemäß Schritt S503 wird überprüft, ob eine angeforderte Temperaturklappenöffnung TKan kleiner als der obere Öffnungsgrenzwert TKo und größer als der untere Öffnungsgrenzwert TKu ist. Ist dies der Fall, können gemäß Schritt S504 die Temperaturklappen 34L, 34R in ihrer tatsächlichen Öffnungsstellung TKis angepasst werden, was durch die beiden Pfeile in Schritt S504 angedeutet ist. Der Kältekreis und/oder die für die Veränderung der die klimatischen Bedingungen beeinflussenden Peripherie bleiben unverändert, Wird die Bedingung des Schritts S503 nicht erfüllt, wird in S505 geprüft, ob die angeforderte Temperaturklappenöffnung größer als der obere Öffnungsgrenzwert TKo ist. Außerhalb dieser Grenzen erfolgt seitens des Kältekreises und/oder der für die Veränderung der die klimatischen Bedingungen beeinflussenden Peripherie eine Veränderung und damit Reaktion auf die veränderten Anforderungen und Randbedingungen.

Ist dies nicht der Fall, ist die angeforderte Öffnungsstellung TKan kleiner als der untere Öffnungsgrenzwert TKu (S506). Das bedeutet, dass der Heizbedarf sinkend ist und dass die Temperaturklappen 34L, 34R eigentlich weiter geschlossen werden müssten. Gemäß dem hier beschriebenen Nachheiz-Verfahren 500 erfolgt aber (noch) kein weiteres Schließen der Temperaturklappen. Vielmehr wird in Schritt S507 die Solltemperatur von am Verdampfer 22 austretender Zuluft L erhöht. Mit anderen Worten wird die Solltemperatur für die Temperatur der Zuluft L nach dem Durchströmen des Verdampfers 22 in Abhängigkeit von der Heizleistung oder dem Heizbedarf eingestellt. Durch das Erhöhen der Solltemperatur am Verdampfer 22 wird Einfluss genommen auf Druck und Temperatur des Kältemittels insbesondere im Heizregister 26 im Kältekreis 11, wobei bei steigender Solltemperatur am Verdampfer 22 der Druck pHD sinkt (S508).

In S509 wird geprüft, ob die angeforderte Temperaturklappenöffnung TKan kleiner ist der untere Öffnungsgrenzwert TKu. Ist dies der Fall, wird in S512 überprüft, ob die Solltemperatur für die am Verdampfer 22 austretende Zuluft bereits auf einen Maximalwert, resultierend aus der per Steuergerät festgelegten erforderlichen Entfeuchtung und/oder maximal zulässigen Obergrenze, eingestellt ist. Wenn die maximal einstellbare Solltemperatur erreicht ist, wird das Nachheizverfahren Reheat I beendet und es wird umgeschaltet in ein anderes Nachheizverfahren, das hier mit RH III bezeichnet ist (S513).

Zusätzlich wird in S512a in einer weiteren Systemabsicherung bewertet, ob ein maximaler Druck pHD oder eine maximale Heißgastemperatur tHG erreicht wird. Insbesondere für den Fall eines stark dynamischen Schließens der Temperaturklappen 34L, 34R, erfolgt eine Verzweigung auf S513 und damit der Wechsel zu einer weiteren Reheat-Verschaltung, dem sog. Reheat III. Denkbar wäre auch, zunächst eine weitere Anhebung des Setpoints der Lufttemperatur nach Verdampfer gemäß Verfahrensschritt S507 durchzuführen. Allerdings mag aufgrund der bereits angedeuteten Systemdynamik ein Moduswechsel in Reheat III als bevorzugte Maßnahme erscheinen. Folglich wird diese im Flussdiagramm bevorzugt dargestellt.

Beim Umschalten auf ein Nachheizverfahren RH III kann das Expansionsventil AE4 (schrittweise) geöffnet werden und das Absperrventil A1 wird geschlossen, so dass das Kältemittel vom Heizregister 26 über den äußeren Wärmeübertrager 18 zum Verdampfer 22 strömt. Alternativ zum Umschalten auf ein anderes Nachheizverfahren können systemseitig Anpassungen SYS für den Betrieb der Kälteanlage 10 vorgenommen werden, wie beispielsweise Schlie-ßen der Temperaturklappen 34L, 34R, wobei stets das Systemverhalten des Kältekreises zu überwachen ist.

Ist die maximal einstellbare Solltemperatur noch nicht erreicht, erfolgt eine weitere Erhöhung der Solltemperatur gemäß S507 und die Schritte S508 und S509 werden erneut durchlaufen. Solange der Heizbedarf sinkend ist, werden die Schritte S507, S508, S509, S512 mehrfach durchlaufen.

Ist die Bedingung in S509 nicht erfüllt, erfolgt in S510 eine Überprüfung, ob die angeforderte Temperaturklappenöffnung TKan größer ist als der obere Öffnungsgrenzwert TKo. Ist dies nicht der Fall, wird in S511 geprüft, ob die angeforderte Temperaturklappenöffnung im Sollbereich, also zwischen TKo und TKu liegt. Ist dies der Fall, wird davon ausgegangen, dass die eingestellte Solltemperatur passend ist und im Wesentlichen beibehalten werden kann (S526). Hierdurch wird gemäß S527 der Druck pHD im Wesentlichen konstant gehalten.

Bei einem steigenden Heizbedarf wird das Verfahren ausgehend von den bereits oben erwähnten Schritten S503 und S505 wie folgt durchgeführt. Wird in S505 festgestellt, dass die angeforderte Temperaturklappenöffnung TKan größer ist als der obere Öffnungsgrenzwert TKo, bedeutet dies, dass der Heizbedarf steigend ist und dass die Temperaturklappen 34L, 34R eigentlich weiter geöffnet werden müssten. Gemäß dem hier beschriebenen Verfahren erfolgt aber (noch) kein weiteres Öffnen der Temperaturklappen. Vielmehr wird in Schritt S515 die Solltemperatur für die am Verdampfer austretende Zuluft abgesenkt. Das Absenken der Solltemperatur kann dabei inkrementell erfolgen. Hierdurch steigt gemäß S516 der Hochdruck pHD im Heizregister 26. Entsprechend steigt auch die Temperatur T des Kältemittels im Heizregister 26.

In S517 wird überprüft, ob der in der Kälteanlage 10 anliegende Hochdruck einen Maximalwert erreicht hat. Ist dies nicht der Fall, erfolgt in S518 die Überprüfung, ob die angeforderte Temperaturklappenöffnung TKan größer ist als der ober Öffnungsgrenzwert TKo. Ist dies der Fall, wird in S519 geprüft, ob die Solltemperatur bereits auf einen minimal möglichen Wert eingestellt ist. Ist die minimal einstellbare Solltemperatur noch nicht erreicht, wird erneut zu S515 verzweigt und die Solltemperatur weiter abgesenkt.

Solange der Heizbedarf steigend ist, werden die Schritte S515, S516, S517, S518, S519 mehrfach durchlaufen. Dabei kann die minimal einstellbare Solltemperatur bei 2° bis 4° liegen, insbesondere ist die minimal einstellbare Solltemperatur so gewählt, dass ein Vereisen des Verdampfers 22 durch ausfallendes Kondensat verhindert wird.

Wird in S517 festgestellt, dass ein maximaler Druck pHD oder eine maximale Heißgastemperatur tHG erreicht wird, erfolgt eine Verzweigung auf S525. S525 steht stellvertretend für einen Wechsel bzw. Umschalten zu einem anderen Nachheizverfahren, das hier mit RH III bezeichnet ist. Beim Umschalten auf ein Nachheizverfahren RH III kann das Expansionsventil AE4 (schrittweise) geöffnet werden und das Absperrventil A1 wird geschlossen, so dass das Kältemittel vom Heizregister 26 über den äußeren Wärmeübertrager 18 zum Verdampfer 22 strömt. Alternativ zum Umschalten auf ein anderes Nachheizverfahren können systemseitige Anpassungen SYS für den Betrieb der Kälteanlage 10 vorgenommen werden, wie beispielsweise Abregeln des Verdichters 12 oder/und Anpassen von sonstigen Systemparametern.

Wird in S519 festgestellt, dass die Solltemperatur bereits auf einen minimalen Wert eingestellt ist, erfolgt eine Verzweigung zu S524, der das Umschalten auf ein anderes Nachheizverfahren RH II illustriert.

Alternativ zu einem Umschalten in das Nachheizverfahren RH II (S524) kann für das hier betrachtete Nachheizverfahren Reheat I das Zuschalten des elektrischen Heizelements 30 in Betracht gezogen werden (S520). Liegt gemäß S521 die angeforderte Temperaturklappenöffnung TKan weiterhin oberhalb des oberen Öffnungsgrenzwerts TKo wird die Heizleistung bzw. Wärmeabgabe des elektrischen Heizelements 30 weiter vergrößert. Sollte die Bedingung in S520 aufgrund von sinkendem Heizbedarf nicht mehr erfüllt sein, wird die Heizleistung bzw. Wärmeabgabe des elektrischen Heizelements 30 gemäß S522 wieder reduziert. Ist das elektrische Heizelement 30 nicht mehr aktiv, was in S523 überprüft wird, erfolgt eine Verzweigung auf die Schritte S510 und S511, so dass bei sinkendem bzw. gesunkenem Heizbedarf eine Anpassung des Drucks durch Anheben der Solltemperatur (S507) erreicht werden kann.

Zusätzlich zu den oben beschriebenen Maßnahmen zur Durchführung des Nachheizverfahrens kann die Menge der zum Verdampfer 22 zugeführten Zuluft L eingestellt werden, um die Heizleistung zu beeinflussen. Dabei kann die Kondition oder Güte der Zuluft eingestellt werden, insbesondere kann als Zuluft Frischluft oder Umluft oder eine Mischung aus Frischluft und Umluft zugeführt werden. Dabei kann Umluft dem Innenraum des Fahrzeugs entnommen werden und Frischluft kann der Fahrzeugumgebung entnommen.

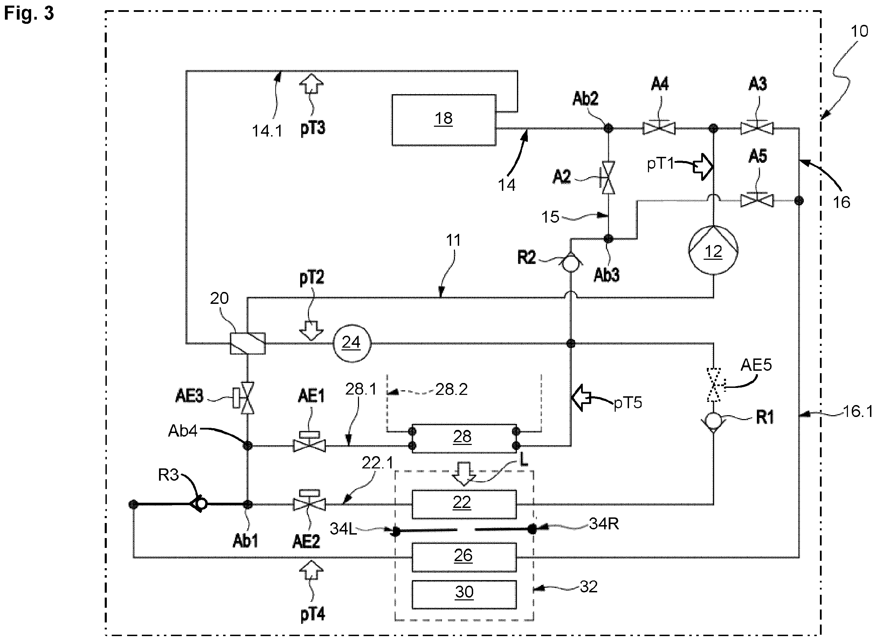

Fig. 3 zeigt eine Ausführungsform einer Kälteanlage 110, mit welcher das oben unter Bezugnahme auf die Fig. 2 beschriebene Nachheizverfahren RH I ebenfalls durchgeführt werden kann. Die Kälteanlage 110 gemäß dieser Ausführungsform ist strukturell vereinfacht verglichen mit der in Fig. 1 dargestellten Kälteanlage. 10. Wie aus der Fig. 3 ersichtlich, ist stromabwärts des Heizregisters 26 nur noch eine Verbindung zum Verdampfer 22 bzw. dem Chiller 28 vorgesehen. Die Kälteanlage 110 weist keinen Nachheizzweig bzw. Reheat-Zweig (RH III) 16.2 (Fig. 1) mehr auf. Entsprechend kann auch der äußere Wärmeübertrager 18 nicht mehr in Reihe zum Heizregister 26 geschaltet werden.

Um das oben beschriebene Nachheizverfahren auch mit der vereinfachten Kälteanlage 110 durchführen zu können, ist zwischen dem Heizregister 26 und dem Expansionsventil AE2 bzw. dem Expansionsventil AE1 ein Rückschlagventil R3 angeordnet. Das Rückschlagventil R3 ermöglicht das Durchströmen von Kältemittel vom Heizregister 26 zum Verdampfer 22 gemäß dem oben beschriebenen Nachheizverfahren, verhindert aber einen Kältemittelfluss in umgekehrter Richtung, also wenn die Kälteanlage im AC-Betrieb arbeitet.

In Fig. 3 ist ferner stromabwärts des Verdampfers 22 in gestrichelter Darstellung ein Expansionsventil AE5 gezeigt. Ein solches Expansionsventil AE5 kann in allen hier gezeigten Ausführungsformen der Kälteanlage 10, 110 (Fig. 1, 3, 4) anstatt des gezeigten Rückschlagventils R1 angeordnet werden. Durch die Anordnung des Expansionsventils AE5 stromabwärts des Verdampfers 22 kann am Verdampfer 22 ein Zwischendruckniveau erzielt werden, das oberhalb der Vereisungsgrenze liegt. Jede weitere Wärmequelle, die eingebunden wird kann auf niedrigem Niederdruckniveau betrieben werden.

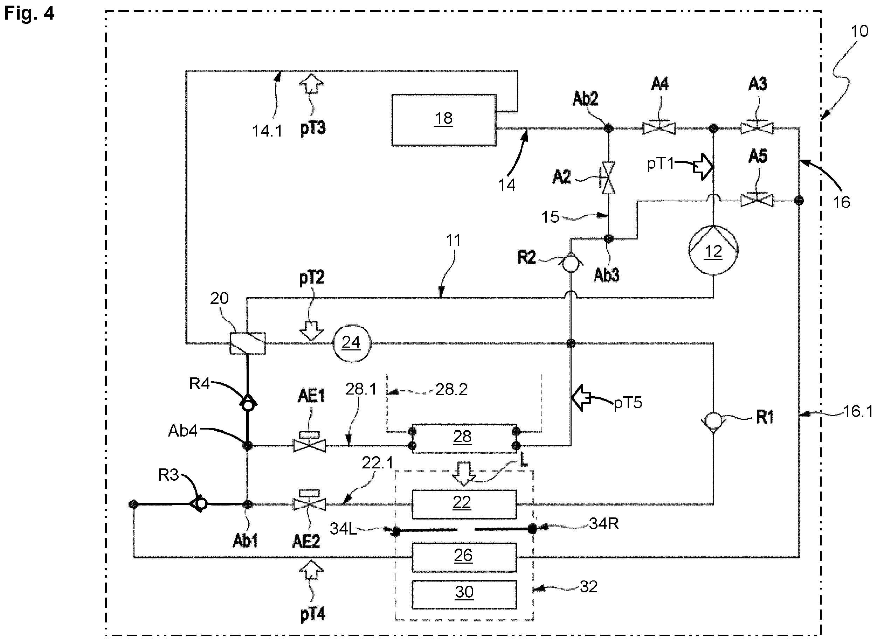

Fig. 4 zeigt die vereinfachte Kälteanlage mit einer weiteren möglichen Anpassung. Anstelle des in Fig. 3 noch vorhandenen Expansionsventils AE3 kann ein Rückschlagventil R4 vorgesehen sein, das zwischen dem inneren Wärmeübertrager 20 und dem Verdampfer 22 bzw. Chiller 28 angeordnet ist. Das Rückschlagventil R4 wird im AC-Betrieb der Kälteanlage 110 von Kältemittel durchströmt. In einem Heizbetrieb verhindert das Rückschlagventil R4 einen Kältemittelstrom vom Heizregister 26 zur Hochdruckseite des inneren Wärmeübertragers 20. Auch mit dieser weiter vereinfachten Konfiguration der Kälteanlage 110 kann das oben beschriebene Nachheizverfahren (Fig. 2durchgeführt werden.

In Bezug auf die angepasste Struktur der Kälteanlage 110 gemäß Fig. 3 und 4 wird noch darauf hingewiesen, dass mit einer solchen Konfiguration ein in den Schritten S513 und S525 illustriertes Umschalten auf ein anderes Nachheizverfahren RH III nicht möglich ist, sondern systemseitige Anpassungen SYS vorgenommen werden müssen.

Das oben unter Bezugnahme auf die Fig. 2 beschriebene Nachheizverfahren kann beispielsweise mit folgenden Werten durchgeführt werden. TKso kann von 60% bis 90% eingestellt sein, insbesondere auf einen Wert zwischen 70% und 85%, bezogen auf die maximale Öffnungsstellung von 100%. Beispielsweise kann TKu 78% sein und TKo kann 82%, so dass TKso einen Bereich von 78% bis 82% abdeckt. Die Auswahl von passenden Öffnungsgrenzwerten TKu und TKo kann insbesondere in Abhängigkeit von Eigenschaften der eingesetzten Kälteanlage gewählt werden, wobei der Bereich von TKu bis TKo eher eng gewählt werden sollte, insbesondere so, dass der Quotient TKu/TKo größer oder gleich 0,8 beträgt. Für das obige Beispiel mit TKu = 78% und TKo =82% berechnet sich der Quotient auf 0,95.

Das im Rahmen dieser Anmeldung beschriebene Nachheizverfahren kann durch Verschaltung einer minimalen Anzahl Komponenten der Kälteanlage 10, 110 erreicht werden. Hierdurch bietet sich auch die Möglichkeit eine vereinfachte Struktur der Kälteanalage 110 in Betracht zu ziehen.

## Patentansprüche

1. Nachheizverfahren (500) zum Betreiben einer Kälteanlage (10) für ein Kraftfahrzeug, wobei die Kälteanlage (10) umfasst:
einen Kältemittelverdichter (12), der mit einem Primärstrang (14) und einem Sekundärstrang (16) verbindbar oder verbunden ist;
einen äußeren Wärmeübertrager (18), der im Primärstrang (14) angeordnet ist;
einen Verdampfer (22), der im Primärstrang (14) angeordnet ist;
ein Heizregister (26), das im Sekundärstrang angeordnet ist;
wenigstens eine bewegliche Temperaturklappe (34L, 34R), die bezogen auf eine Zuluftströmungsrichtung (L) vor oder nach dem Heizregister (26) angeordnet ist;
wenigstens ein Absperrorgan (AE4, A1; R3; R4), das stromabwärts des Heizregisters (26) im Sekundärstrang (16) angeordnet ist;
wobei das Nachheizverfahren folgende Schritte umfasst:
Einstellen des wenigstens einen Absperrorgans (AE4, A1; R3, R4) in eine Position, in der Kältemittel stromabwärts des Heizregisters (26) in den Verdampfer (22) strömt unter Umgehung des äußeren Wärmeübertragers (18)
wobei das Nachheizverfahren durch folgende Schritte gekennzeichnet ist:
Messen der Temperatur der Zuluft nach dem Durchströmen des Verdampfers (22) und Einstellen einer Solltemperatur (SP T_Verd) für die Temperatur der Zuluft nach dem Durchströmen des Verdampfers (22) in Abhängigkeit von einem Entfeuchtungsbedarf oder/und von der Heizleistung oder/und von dem Heizbedarf,
Einstellen der wenigstens einen Temperaturklappe (34L, 34R) in einer Soll-Öffnungsstellung (TKso), die innerhalb eines Bereichs von einem oberen Öffnungsgrenzwert (TKo) zu einem unteren Öffnungsgrenzwert (TKu) liegt;
Beibehalten (502a) der Soll-Öffnungsstellung (TKso) der Temperaturklappe (34L. 34R), wenn eine angeforderte Öffnungsstellung (TKan) kleiner als der untere Öffnungsgrenzwert (TKu) oder größer als der obere Öffnungsgrenzwert (TKo) ist; und
während des Beibehaltens der Soll-Öffnungsstellung (TKso), schrittweises Reduzieren (S515) oder schrittweises Anheben (S507) der Solltemperatur (SP T_Verd) in Abhängigkeit von dem Heizbedarf, der anhand eines Kälteanlagenparameters (TKan) ermittelt wird, bis sich hochdruckseitig an dem Heizregister (26) ein vorbestimmtes Druckniveau einstellt oder/und bis eine maximale oder minimale Solltemperatur (SP T_Verd) eingestellt ist (S512, S519).

2. Nachheizverfahren (500) nach Anspruch 1, wobei die Umgebungstemperatur erfasst wird und das Verfahren durchgeführt wird, wenn die Umgebungstemperatur bis zu 15°C beträgt, insbesondere in einem Bereich von etwa 5° bis 15° liegt.

3. Nachheizverfahren (500) nach Anspruch 1 oder 2, wobei nach dem Erreichen des vorbestimmten Druckniveaus das wenigstens eine Absperrorgan (AE4, A1) geöffnet wird, so dass das Kältemittel stromabwärts des Heizregisters (26) durch den äußeren Wärmeübertrager (18) strömt bevor es durch den Verdampfer (22) strömt.

4. Nachheizverfahren (500) nach einem der vorhergehenden Ansprüche, wobei die Soll-Öffnungsposition (TKso) der Temperaturklappe (34L, 34R) auf einen Wert zwischen 60% bis 90% eingestellt wird, insbesondere auf einen Wert zwischen 70% und 85%, bezogen auf eine maximale Öffnungsstellung von 100%.

5. Nachheizverfahren (500) nach einem der vorhergehenden Ansprüche, wobei die Menge der zum Verdampfer zugeführten Zuluft (L) eingestellt wird, um die Heizleistung zu beeinflussen.

6. Nachheizverfahren nach Anspruch 5, wobei die Kondition oder Güte der Zuluft eingestellt wird, insbesondere Frischluft oder Umluft oder eine Mischung aus Frischluft und Umluft zugeführt wird.

7. Kälteanlage (10) für ein Kraftfahrzeug, mit
einem Kältemittelverdichter (12), der mit einem Primärstrang (14) und einem Sekundärstrang (16) verbindbar oder verbunden ist;
einem äußeren Wärmeübertrager (18), der im Primärstrang (14) angeordnet ist;
einem Verdampfer (22), der im Primärstrang (14) angeordnet ist;
einem Heizregister (26), das im Sekundärstrang (16) angeordnet ist;
wenigstens einer beweglichen Temperaturklappe (34L. 34R), die bezogen auf eine Zuluftströmungsrichtung (L) vor oder nach dem Heizregister (26) angeordnet ist;
wenigstens einem Absperrorgan (AE4, A1,; R3, R4), das stromabwärts des Heizregisters (26) im Sekundärstrang (16) angeordnet ist;
wobei die Kälteanlage (10) ein Steuergerät aufweist, das dazu eingerichtet ist, die Kälteanlage (10) in einem Nachheizbetrieb nach einem der vorhergehenden Ansprüche zu betreiben, und
wobei in einem solchen Nachheizbetrieb das Kältemittel ausgehend vom Kältemittelverdichter (12) nacheinander die folgenden Komponenten der Kälteanlage (10) durchströmt unter Umgehung des äußeren Wärmeübertragers (18): Heizregister (26) im Sekundärstrang, Verdampfer (22) im Primärstrang.

8. Kälteanlage (10) nach Anspruch 7, wobei der äußere Wärmeübertrager (18) bidirektional durchströmbar ist.

9. Kälteanlage (10) nach Anspruch 7 oder 8, wobei zwischen dem Heizregister (26) und dem Verdampfer (22) ein Absperrventil (A1) angeordnet ist und wobei zwischen dem Heizregister (26) und dem äußeren Wärmeübertrager (18) ein Expansionsventil (AE4) angeordnet ist.

10. Kraftfahrzeug mit einer Kälteanlage (10) nach einem der Ansprüche 7 bis 9.

## Claims

1. Reheating method (500) for operating a refrigeration system (10) for a motor vehicle, wherein the refrigeration system (10) comprises:
a refrigerant compressor (12) which can be connected or is connected to a primary line (14) and a secondary line (16);
an external heat exchanger (18) which is arranged in the primary line (14);
an evaporator (22) which is arranged in the primary line (14);
a heating register (26) which is arranged in the secondary line;
at least one movable temperature flap (34L, 34R), which is arranged in front of or behind the heating register (26) in relation to a supply air flow direction (L);
at least one shut-off unit (AE4, A1; R3; R4) which is arranged downstream from the heating register (26) in the secondary line (16);
wherein the reheating method comprises the following steps:
adjusting the at least one shut-off unit (AE4, A1; R3; R4) into a position in which refrigerant flows downstream of the heating register (26) into the evaporator (22), bypassing the external heat exchanger (18)
wherein the reheating method is **characterised by** the following steps:
measuring the temperature of the supply air after flowing through the evaporator (22) and setting a target temperature (SP T_Verd) for the temperature of the supply air after flowing through the evaporator (22) as a function of a dehumidification requirement and/or of the heating power and/or of the heating requirement,
setting the at least one temperature flap (34L, 34R) in a target opening position (TKso), which lies within a range from an upper opening threshold value (TKo) to a lower opening threshold value (TKu);
maintaining (502a) the target opening position (TKso) of the temperature flap (34L, 34R), when a requested opening position (TKan) is smaller than the lower opening threshold value (TKu) or greater than the upper opening threshold value (TKo); and
while maintaining the target opening position (TKso), step-by-step reduction (S515) or step-by-step increase (S507) in the target temperature (SP T_Verd) as a function of the heating requirement, which is determined on the basis of the refrigeration system parameter (TKan) until on the high-pressure side a predetermined pressure level is set and/or until a maximum or minimum target temperature (SP T_Verd) is set (S512, S519) at the heating register (26).

2. Reheating method (500) according to claim 1, wherein the surrounding temperature is detected and the method is carried out when the surrounding temperature is up to 15°C, in particular is in a range from approximately 5° to 15°.

3. Reheating method (500) according to claim 1 or 2, wherein after the predetermined pressure level is reached, the at least one shut-off unit (AE4, A1) is opened, such that the refrigerant downstream of the heating register (26) flows through the external heat exchanger (18) before it flows through the evaporator (22).

4. Reheating method (500) according to any of the preceding claims, wherein the target opening position (TKso) of the temperature flap (34L, 34R) is set to a value between 60% to 90%, in particular to a value between 70% and 85%, in relation to a maximum opening position of 100%.

5. Reheating method (500) according to any of the preceding claims, wherein the quantity of the supply air (L) supplied to the evaporator is set, in order to influence the heating power.

6. Reheating method according to claim 5, wherein the condition or quality of the supply air is set, in particular fresh air or recycled air or a mixture of fresh air and recycled air is supplied.

7. Refrigeration system (10) for a motor vehicle, having
a refrigerant compressor (12) which can be connected or is connected to a primary line (14) and a secondary line (16);
an external heat exchanger (18) which is arranged in the primary line (14);
an evaporator (22) which is arranged in the primary line (14);
a heating register (26) which is arranged in the secondary line (16);
at least one movable temperature flap (34L, 34R), which is arranged in front of or behind the heating register (26) in relation to a supply air flow direction (L);
at least one shut-off unit (AE4, A1; R3; R4) which is arranged downstream from the heating register (26) in the secondary line (16);
wherein the refrigeration system (10) has a control device which is configured to operate the refrigeration system (10) in a reheating operation according to any of the preceding claims, and
wherein in a reheating operation of this sort, the refrigerant, starting from the refrigerant compressor (12) flows through the following components in the refrigeration system (10) one after another, bypassing the external heat exchanger (18): heating register (26) in the secondary line, evaporator (22) in the primary line.

8. Refrigeration system (10) according to claim 7, wherein the external heat exchanger (18) can be flowed through bi-directionally.

9. Refrigeration system (10) according to claim 7 or 8, wherein between the heating register (26) and the evaporator (22), a shut-off valve (A1) is arranged and wherein between the heating register (26) and the external heat exchanger (18), an expansion valve (AE4) is arranged.

10. Motor vehicle having a refrigeration system (10) according to any of claims 7 to 9.

## Revendications

1. Procédé de réchauffage (500) pour faire fonctionner une installation de réfrigération (10) pour un véhicule à moteur, dans lequel l'installation de réfrigération (10) comprend :
un compresseur de réfrigérant (12) qui peut être connecté ou est connecté à une branche primaire (14) et à une branche secondaire (16) ;
un échangeur de chaleur extérieur (18) qui est disposé dans la branche primaire (14) ;
un évaporateur (22) qui est disposé dans la branche primaire (14) ;
un registre de chauffage (26), qui est disposé dans la branche secondaire ;
au moins un volet de température mobile (34L, 34R) qui est disposé devant ou derrière le registre de chauffage (26) par rapport à une direction d'écoulement d'air d'alimentation (L) ;
au moins un organe d'arrêt (AE4, A1 ; R3 ; R4) disposé en aval du registre de chauffage (26) dans la branche secondaire (16) ;
dans lequel le procédé de réchauffage comprend les étapes suivantes :
réglage de l'au moins un organe d'arrêt (AE4, A1 ; R3, R4) sur une position dans laquelle le réfrigérant s'écoule en aval du registre de chauffage (26) dans l'évaporateur (22) en contournant l'échangeur de chaleur extérieur (18)
dans lequel le procédé de réchauffage est **caractérisé par** les étapes suivantes :
mesure de la température de l'air d'alimentation après son passage à travers l'évaporateur (22) et réglage d'une température de consigne (SP T_Verd) pour la température de l'air d'alimentation après son passage à travers l'évaporateur (22) en fonction d'un besoin de déshumidification ou/et de la puissance de chauffage ou/et du besoin de chauffage,
réglage de l'au moins un volet de température (34L, 34R) sur une position d'ouverture de consigne (TKso) qui se situe dans une plage allant d'une valeur limite d'ouverture supérieure (TKo) à une valeur limite d'ouverture inférieure (TKu) ;
maintien (502a) de la position d'ouverture de consigne (TKso) du volet de température (34L, 34R) lorsqu'une position d'ouverture demandée (TKan) est inférieure à la valeur limite d'ouverture inférieure (TKu) ou supérieure à la valeur limite d'ouverture supérieure (TKo) ; et
pendant le maintien de la position d'ouverture de consigne (TKso), réduction progressive (S515) ou augmentation progressive (S507) de la température de consigne (SP T_Verd) en fonction de la demande de chauffage qui est déterminée à l'aide d'un paramètre d'installation de réfrigération (TKan), jusqu'à ce qu'un niveau de pression prédéterminé s'établisse côté haute pression au niveau du registre de chauffage (26) ou/et jusqu'à ce qu'une température de consigne maximale ou minimale (SP T_Verd) soit réglée (S512, S519).

2. Procédé de réchauffage (500) selon la revendication 1, dans lequel la température ambiante est détectée et le procédé est mis en oeuvre lorsque la température ambiante est inférieure ou égale à 15 °C, en particulier lorsqu'elle se situe dans une plage d'environ 5° à 15°.

3. Procédé de réchauffage (500) selon la revendication 1 ou 2, dans lequel, une fois le niveau de pression prédéterminé atteint, l'au moins un organe d'arrêt (AE4, A1) est ouvert de sorte que le réfrigérant s'écoule en aval du registre de chauffage (26) à travers l'échangeur de chaleur extérieur (18) avant de s'écouler à travers l'évaporateur (22).

4. Procédé de réchauffage (500) selon l'une quelconque des revendications précédentes, dans lequel la position d'ouverture de consigne (TKso) du volet de température (34L, 34R) est réglée à une valeur comprise entre 60 % et 90 %, en particulier à une valeur comprise entre 70 % et 85 %, par rapport à une position d'ouverture maximale de 100 %.

5. Procédé de réchauffage (500) selon l'une quelconque des revendications précédentes, dans lequel la quantité d'air d'alimentation (L) amenée vers l'évaporateur est réglée pour influencer la puissance de chauffage.

6. Procédé de réchauffage selon la revendication 5, dans lequel la condition ou la qualité de l'air d'alimentation est réglée, en particulier de l'air frais ou de l'air recyclé ou un mélange d'air frais et d'air recyclé est amené.

7. Installation de réfrigération (10) pour un véhicule à moteur, avec
un compresseur de réfrigérant (12) qui peut être connecté ou est connecté à une branche primaire (14) et à une branche secondaire (16) ;
un échangeur de chaleur extérieur (18) qui est disposé dans la branche primaire (14) ;
un évaporateur (22) qui est disposé dans la branche primaire (14) ;
un registre de chauffage (26), qui est disposé dans la branche secondaire (16) ;
au moins un volet de température mobile (34L, 34R) qui est disposé devant ou derrière le registre de chauffage (26) par rapport à une direction d'écoulement d'air d'alimentation (L) ;
au moins un organe d'arrêt (AE4, A1 ; R3 ; R4) disposé en aval du registre de chauffage (26) dans la branche secondaire (16) ;
dans lequel l'installation de réfrigération (10) présente un dispositif de commande qui est configuré pour faire fonctionner l'installation de réfrigération (10) dans un mode de réchauffage selon l'une quelconque des revendications précédentes, et
dans lequel, dans un tel mode de réchauffage, le réfrigérant, émanant du compresseur de réfrigérant (12), traverse consécutivement les composants suivants de l'installation de réfrigération (10) en contournant l'échangeur de chaleur extérieur (18) : registre de chauffage (26) dans la branche secondaire, évaporateur (22) dans la branche primaire.

8. Installation de réfrigération (10) selon la revendication 7, dans laquelle l'échangeur de chaleur extérieur (18) peut être traversé de manière bidirectionnelle.

9. Installation de réfrigération (10) selon la revendication 7 ou 8, dans laquelle une vanne d'arrêt (A1) est disposée entre le registre de chauffage (26) et l'évaporateur (22) et dans laquelle un robinet détendeur (AE4) est disposé entre le registre de chauffage (26) et l'échangeur de chaleur extérieur (18).

10. Véhicule à moteur avec une installation de réfrigération (10) selon l'une quelconque des revendications 7 à 9.
